# EUROPEAN PATENT APPLICATION

(11) **EP 4 296 754 A1**
(43) Date of publication of application: **27.12.2023**
(21) Application number: 22181035.1
(22) Date of filing: 24.06.2022
(51) Int. Cl.: G02B 27/01, G02B 13/00

(54) **OPTICAL DEVICE AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An optical device made according to an augmented reality optical design, the optical device comprising a plurality of optical elements for transmitting a light from a light source for display on an eye of a user, wherein the optical device comprises: a light source generating the light; a lens assembly off-axis from the light source and configured to receive the light wherein the lens assembly includes a plurality of lenses and wherein the lens assembly has been truncated by removal of material from the or each lens of the plurality of lenses where an expected light beam is not predicted to pass; a combiner, receiving the light from the lens assembly via one or more further optical elements of the plurality of optical elements and directing the light to form a virtual image at an exit pupil at the position of the eye.

## Description

### FIELD

The present invention relates to an optical device and method.

### BACKGROUND

Augmented reality optical devices are well known and are intended to provide a real world image and a virtual image that are overlain when presented to a user. Many of the augmented reality optical devices are intended to be worn by the user in for example head worn devices (HWD), head mounted displays (HMD) or in a helmet. In order to avoid causing physical discomfort to the user it is helpful if the worn devices are light weight and compact. This is not always the case.

As a result, there is a need for an improved, compact and light weight optical device for use in an augmented reality optical design.

### SUMMARY

According to an aspect of the present invention there is provided an optical device made according to an augmented reality optical design, the optical device comprising a plurality of optical elements for transmitting a light from a light source for display on an eye of a user, wherein the optical device comprises: a light source generating the light; a lens assembly off-axis from the light source and configured to receive the light wherein the lens assembly includes a plurality of lenses and wherein the lens assembly has been truncated by removal of material from the or each lens of the plurality of lenses where an expected light beam is not predicted to pass; a combiner, receiving the light from the lens assembly via one or more further optical elements of the plurality of optical elements and directing the light to form a virtual image at an exit pupil at the position of the eye.

In an aspect, the lens assembly is a relay lens.

In an aspect, the lens assembly comprises three or more lenses.

In an aspect, the lens assembly is made from a plastics material or glass.

In an aspect, the lens assembly comprises a combination of singlet lenses and doublet lenses.

In an aspect, at least one of the plurality of lenses has a plano rear surface.

In an aspect, at least two of the plurality of lenses are arranged as a cemented optical doublet.

In an aspect, he plurality of lenses are arranged co-axially.

In an aspect, the plurality of lenses each include absorbent edges.

In an aspect, the plurality of lenses each have a different optical prescription.

In an aspect, the plurality of lenses each include absorbent edges.

In an aspect, the one or more further optical elements of the plurality of optical elements comprise: a first at least partially mirrored device; a second optical device positioned substantially orthogonal relative to the first at least partially mirrored device, and located intermediate the lens assembly and the first at least partially mirrored device, the second optical device configured to receive the light from the lens assembly and transmit the light to the first at least partially mirrored device.

In an aspect, the light source is an emissive source including a plurality of self-emissive pixels.

In an aspect, each pixel is adapted for illumination and emission over a wide cone angle which is greater than+/- 25 deg.

In an aspect, the optical device is arranged to fold a light path about a first axis (XYZ) and a second axis (XYZ).

In an aspect, the optical device forming part of a wearable device and wherein at least a part of the optical device is folded upward or to the side of a brow of a user.

According to an aspect of the present invention there is provided an optical device made according to an augmented reality optical design, the optical device comprising a plurality of optical elements for transmitting a light from a light source for display on an eye of a user, wherein the optical device comprises: a light source generating the light; a lens assembly off-axis from the light source and configured to receive the light wherein the lens assembly includes a plurality of lenses and wherein the lens assembly has been truncated by removal of material from the or each lens of the plurality of lenses where an expected light beam is not predicted to pass; a combiner, receiving the light from the lens assembly via one or more further optical elements of the plurality of optical elements and directing the light to form a virtual image at an exit pupil at the position of the eye, wherein the combiner comprises a first inner optical surface form and a second outer optical surface form, wherein the first inner optical surface form and the second inner optical surface are different to minimize deviations in an outside view from the combiner; wherein the one or more further optical elements of the plurality of optical elements comprise: a first at least partially mirrored device; a second optical device positioned substantially orthogonal relative to the first at least partially mirrored device, and located intermediate the lens assembly and the first at least partially mirrored device, the second optical device configured to receive the light from the lens assembly and transmit the light to the first at least partially mirrored device.

According to an aspect of the present invention there is provided a binocular optical device comprising two optical devices according to another aspect.

According to an aspect of the present invention there is provided a wearable device including one or two optical devices according to another aspect.

According to an aspect of the present invention there is provided system comprising: a plurality of processors configured to send and receive data and to process data; one or more sensors collecting at least some of the data from an environment and sending the data to the processors; and a wearable device according to another aspect.

According to an aspect of the present invention there is provided a method of directing light through an optical device made according to an augmented reality optical design, the optical device comprising a plurality of optical elements for transmitting a light from a light source for display on an eye of a user, the method comprising: emitting, via a light source, a light to a lens assembly, wherein the lens assembly includes a plurality of lenses and wherein the lens assembly has been truncated by removal of material from the or each lens of the plurality of lenses where an expected light beam is not predicted to pass; directing, via one or more further optical devices, the light towards a combiner; directing, via the combiner, the light to form a virtual image at an exit pupil of the optical device; wherein the combiner comprises a first inner optical surface form and a second outer optical surface form, wherein the first inner optical surface form and the second inner optical surface are different to minimize deviations in an outside view from the combiner.

In an aspect, further comprising: designing the optical device; determine a light path through the design; identify areas of the lens assembly through which no light is predicted to pass; updating the design to truncate one of more of the plurality of lenses based on where the light is predicted to pass.

In an aspect, removing lens material from the lens assembly in regions where no light is projected to pass.

In an aspect, applying absorbent edges to each of the plurality of lenses.

In an aspect, cementing one or more of the plurality of lenses together.

### BRIEF DESCRIPTION OF THE FIGURES

Embodiments of the invention will now be described by way of example only with reference to the figures, in which:
Figure 1 shows a simplified optical diagram to explain at least one problem associated with known optical devices;
Figure 2 shows a simplified optical diagram relating to a high level representation of an optical device;
Figure 3 shows a simplified optical diagram relating to improvements in an optical device according to the present invention;
Figure 4 shows a more detailed optical diagram relating to improvements in an optical device according to the present invention;
Figure 5 shows further details of the optical device in figure 4 according to the present invention;
Figure 6 shows a relay lens used in an optical device according to the present invention;
Figure 7 shows an optical diagram showing a bifocal arrangement of the optical device according to the present invention;
Figures 8 and 9 each show a mock-up of the optical device according to the present invention;
Figure 10 is a flow diagram showing operation of the optical device according to the present invention.

### DETAILED DESCRIPTION

The present invention relates to an augmented reality optical design for providing a real world image and a virtual image that are overlain when presented to a user. The augmented reality optical design is also referred to as an optical device which is designed in accordance with the augmented reality optical design. The optical device is part of an optical system which is used in many different contexts to provide information to a user. In one case this is to display information to a pilot of a vehicle, such as an aircraft.

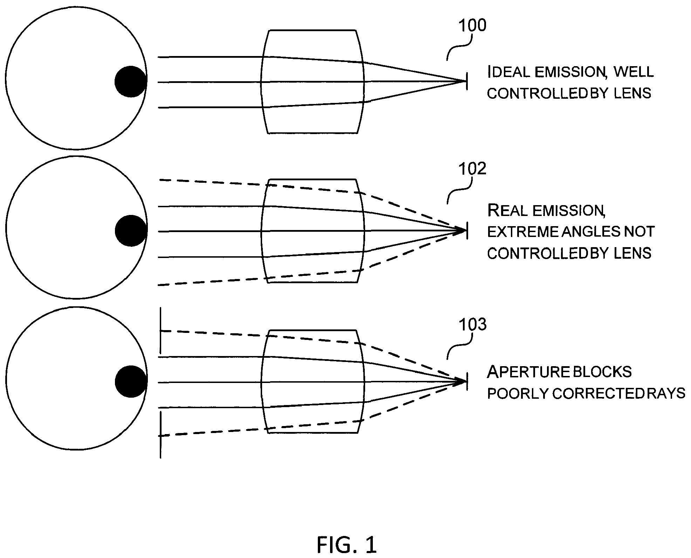

In general such a system is designed to make use of an emissive display. Emissive displays, typically have a wide cone angle of emission. This can present issues if the total amount of light emitted by the display is not accurately controlled. Figure 1 shows an ideal emission 100 and two emissions 102 and 103 which are not ideal. Light which is emitted by the display source outside of the cone angle as required by the optical system to fulfil the exit pupil requirements can make its way through the system and either degrade one or more display parameters (e.g. contrast) or make its way toward the eye. If this light is then visible by a user, it can result in a region of an exit pupil in which the display is poorly corrected (e.g. blurry), but still visible (scenario 102). Scenario 103 shows how a physical aperture 104 could be used to limit the visible light as described in further detail below with respect to the invention. It should be noted aperture 104 could alternatively be present internal to the optical system (i.e. not in front of the eye), such as the optical stop in a conventional optical projection system.

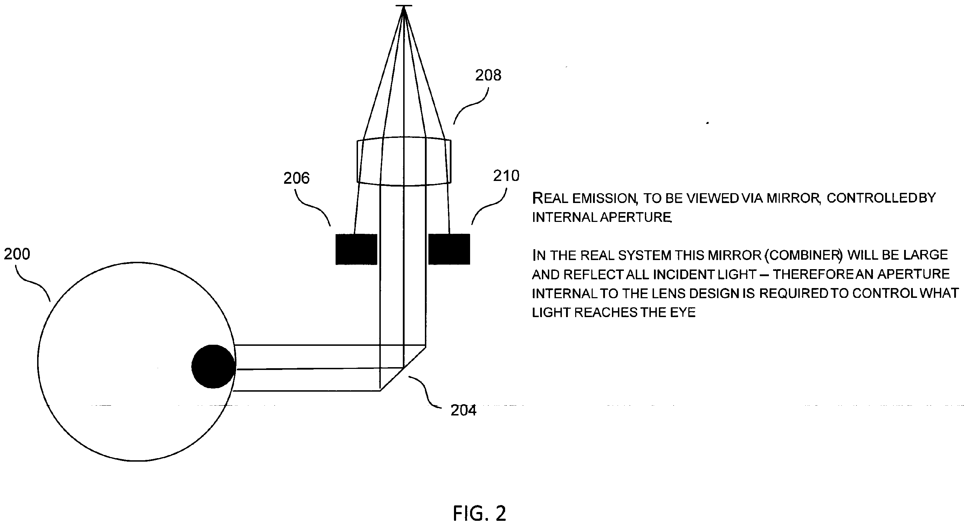

Figure 2 is a schematic drawing of a folding linear structure. The known linear system is changed so that the eye 200 can see an image via the use of a combining mirror 204. An aperture position 206 internal to a lens system 208 is needed to prevent the eye being able to see uncorrected light 210. This results in a real emission, viewed via a mirror, controlled by an internal aperture position 206.

Traditionally the apertures would be absorbing plates with cut-outs. These are not preferred as they limit the flexibility in layout and require either additional mechanical components or a more complex housing design.

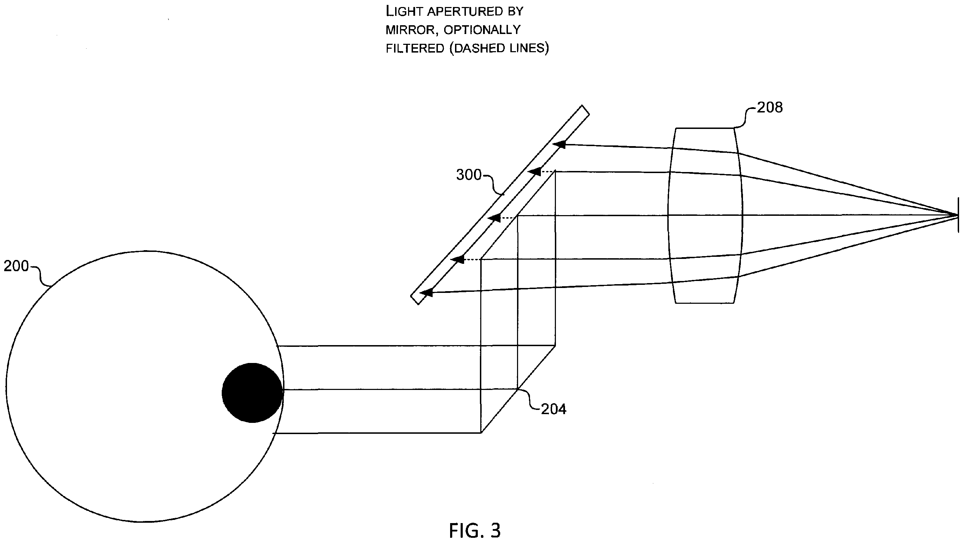

In the present invention as shown in figure 3, the aperture is defined in a different manner and overcomes the problems of tradition apertures in augmented reality optical design.

As shown in figure 3, the present invention includes an aperture which is a mirror based aperture 300. Only rays which strike the mirror 300 are on the correct optical path to make it toward the eye 200. Therefore the shape and/or size of the mirror 300 has a direct correlation to the shape and/or size of the exit pupil which the system generates and therefore the light which makes it to the exit pupil can be constrained by this. The system further includes a single lens (for simplicity) but could include a more complex arrangement. Through the use of the mirror based aperture the rays of light passing through the system can be apertured down whilst the system is simultaneously folded offering increased flexibility, space saving and other related improvements. Light apertured by the mirror is optionally filtered (dotted lines) 310, to allow for additional control over the bandwidth of optical light which propagates the system.

The mirror 300 is located at or near the optical stop of the system and as such the ray bundle across the total field of view of the system is incident across a well-defined, small area. The mirror 300 is configured to be used to perform additional optical functions such as filtering or dimming of the incident light, by variation of its design. This could entail the use of different optical coatings, materials and the like. Whilst a similar function could be achieved by placing a traditional filter over a traditional transmissive optical aperture plate this again increases component count which is not desirable. Additionally, a traditional filter is required to either absorb or reflect filtered light which presents the risk of it being reflected or scattered back into the lens arrangement. However, with the mirror arrangement of figure 3 the light which is not reflected by the mirror is transmitted through to the rear surface of the mirror and is absorbed. There is no stray illumination and spurious light is avoided.

Additional further benefits of a partially transmissive mirror include a portion of light from the lens arrangement which is transmitted by the mirror could be collected by a supplementary small lens system arranged behind the mirror, such as a camera lens system and sensor arranged to monitor the display content for the purposes of monitoring. A still further benefit is that additional light can be injected into the optical system from behind the mirror, such as IR illumination for the purposes of eye tracking, or an additional/secondary display lens arrangement to provide additional optical function.

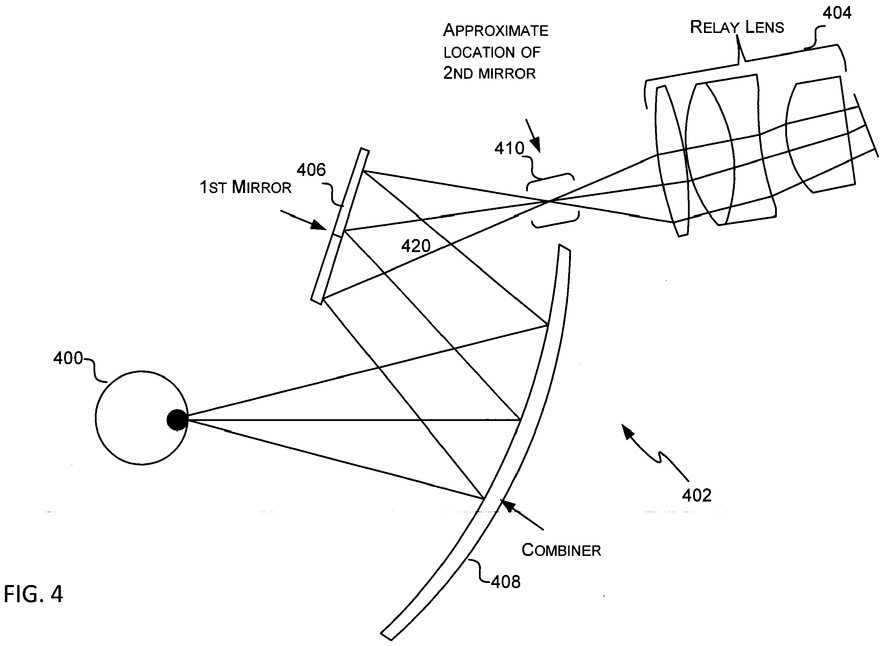

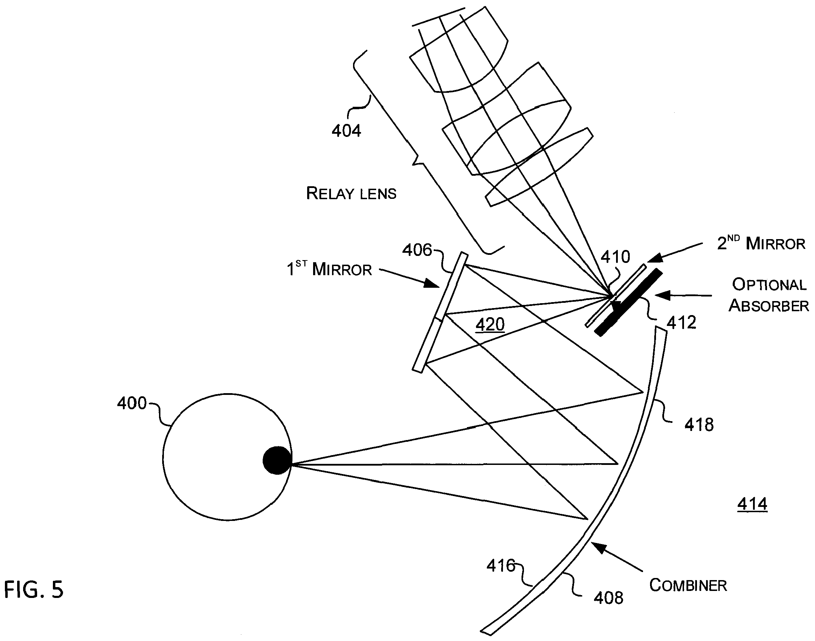

The basic concept as described above is further developed as described with reference to figures 4 and 5 and provide still further benefits. As previously mentioned, emissive image sources (e.g. optical devices) according to the present invention have a wide cone angle of emission. The emissive image source 424 includes a plurality of self-emissive pixels. Each pixel is capable of illumination and emission of light over a wide cone angle. The cone angle is greater than about +/-25deg and up to about +/-90deg. However as will be explained in more detail below the optical device of the present invention compensates for the problems of stray light within the optical device which would ordinarily cause a degradation of the display content such as lower contrast or secondary images. In the present application the image source is also referred to as a light source and generates light which passes through the optical device and on arrival at the pupil of the user forms an image. In addition the light source is able to be varied for different situation to cover the optical and non-optical wavelengths.

In a first case in figure 4 light is directed towards the eye 400 by means of optical device 402. The optical device 402 includes a relay lens or lens assembly 404, a first element 406 and a combiner element 408. The approximate position of a second element is shown as 410. In figure 5 a second element 412 is illustrated. The first and second elements 406 and 412 are mirrors in an example. In the figure the X axis is across the eyes, the Y axis is outward from the head and the Z axis is the direction from the top to the bottom of the head.

In figure 4, the device is unfolded about position 410 of the second mirror and secondly with the second mirror 412 inserted the device is further folded in-plane to the drawing. The second mirror 412 is rotated about the Y axis although this is not shown in the sketch as it is a 2D projection for clarity. The mirror can be rotated about the X or Y axis - adding to flexibility in the folding arrangement e.g. it could fold the system upwards or to the side of the brow. Locating the second mirror 412 near to or ideally about the stop of the device is optimal. The device includes an appropriate aperture whilst simultaneously folding the relay lens around an angle such that it wraps around the typical shape of the head (as shown in figurers 8 and 9). In some cases, the second mirror is an optical device that is partially transmissive, to filter or transfer unwanted light onto an absorbing region. The optical device enables light to be directed to the at least partially reflective surface of the first mirror device. The figures show single rays from a theoretical exit pupil position, for a nominal set of three field angles. It will be appreciated that a wider exit pupil area will provide multiple field angles (i.e. coverage of the lenses and/or mirrors with rays is greater than shown).

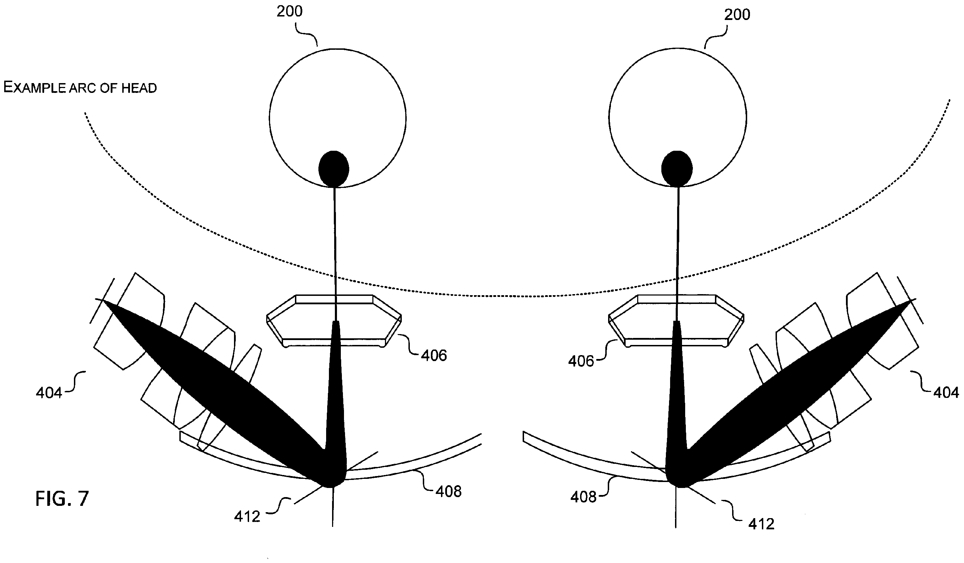

The optical device is arranged such that a light path is defined in which there are two folds. The first at the second mirror and the second at the first mirror. This arrangement ensures a compact device as also shown in figure 7. As a result of the two folds the overall optical device includes parts of the arrangement can be supported on the side of the head, in use. This adds to the comfort and weight of the device as a housing for the device will be smaller and lighter. Making the optical device more practical to wear. In addition the view through the combiner is not interfered with by bulky or visible devices.

The combiner element 408 comprising a non-spherical surface form, tilted about at least a first axis, in this case the X axis. The surface form is also decentred in the Y axis, i.e. the central ray in the FOV does not strike the centre of the optical surface form The combiner is arranged to redirect one or more wavelengths toward the user to allow the user to view a virtual display created by the optical device simultaneous with the outside world 414. The combiner 408 is arranged to redirect light incident therethrough by use of an optical coating applied over at least some of the surface of the combiner. The coating is ideally applied over the whole surface, alternatively only the "optically active" region of the combiners could be coated e.g. only where the rays are likely to hit the combiner and does not hit elsewhere. The non-spherical shape is used to help compensate for off-axis aberrations. Because the combiner is tilted it induces optical aberrations into the image light.

Aberrations are caused specifically because the combiner is off-axis to the linear path of light, these aberrations can include spherical, coma, astigmatism and distortion. The combiner is tilted to redirect the light correctly and if it was not correctly tilted the light would not be sent towards the eye. Using just a spherical surface form limits the degrees of freedom of optical correction in the design, allowing the combiner to have a more complicated surface form, e.g. the biconic surface, thus allows additional degrees of freedom to better correct the aberrations caused by the fact the element is tilted.

The use of a biconic surface form has a number of benefits. A different radius in both the X and Y axis allows for different optical power in both axes, and also the introduction of a conic contribution in both the X and Y axes. The conic contribution changes the spherical form into alternate surface form shapes dependent upon the value of the conic contribution, such as elliptical, hyperbolic or parabolic which are more eccentric in terms of shape and help to compress the ray bundle of the reflected light into a smaller bundle as compared to a typical spherical surface form.

The combiner includes a first optical surface form on its inner surface 416 and a different second optical surface form on its outer surface 418, to minimize deviations to the outside world view 414. The surface form on the outer surface 418 is described by a different set of optical parameters to the inner surface 416. The outer surface 418 is generally not co-axial to the inner surface 416 and the thickness between the two surfaces varies across the area of the combiner 408. The surface forms are generally described by a different radius and conic constant in the X and Y axis such that they both are biconic with differing optical prescriptions. In some cases the surface forms could have additional complexity, as described by a multiple order polynomial function or through the inclusion of aspheric form contributions.

In addition to an optical coating the combiner 408 is generally arranged to redirect the light through the use of one of the following optical elements applied over an area of the combiner: a holographic optical element, a diffractive optical element, or an optical microstructure (none of which are shown). The use of these optical technologies can provide additional degrees of freedom to the system to redirect or orientate the ray bundle of light in a manner which could not be achieved through the use of a reflective coating alone. As an example a holographic or diffractive optical element could redirect the light at more extreme angles, in accordance with the laws of diffraction, without having to induce a further tilt to the combiner element, as would be needed if only a reflective optical coating is used wherein the design is limited by the laws of reflection.

In some cases the combiner 408 is made of a plastics material and as mentioned above includes coatings having various function. The result is a efficient and highly transmissive component which is very well suited for use in the augmented reality optical design. In most cases the combiner has a transmissivity suitable to view an augmented reality view of symbology and the outside world. If the optical device is to be used in a virtual environment the transmissivity of the combiner can be reduced to close to zero.

The first mirror 406 is optically powered, and its front surface 420 may be decentred and tilted. Different combinations of power, tilt and decentring are used depending upon the required layout and/or configuration of the device. The first mirror 406 is reflective on one side or another. In a first case the first mirror comprises a reflective first surface where the light undergoes a first surface reflection from the reflective first surface. In a different case the first mirror includes a transmissive first surface and reflective second surface, wherein light passes through the mirror and undergoes a second surface reflection and passes back via the first surface, in this case the element acts like a traditional lens with reflective back surface, adding additional degrees of freedom to the design.

The first mirror 406 is located near to an intermediate image plane of the optical design, meaning its size and shape assist in defining or limiting the field of view of the image presented to the user. When light is not reflected by the mirror it does not continue to make it toward the combiner and the eye of the user, and instead can be absorbed by the surrounding chassis or support, thereby ameliorating the control of stray light. The first mirror 406 limits the visible field of view presented to a user, by acting as an optical aperture. The first mirror 406 also enables the optical design to fold the optical path around the head of a user and to be tiltable or rotatable in more than one axis. Arranging the first mirror to be tilted can also help to compensate aberrations induced by the tilted combiner.

The second mirror 412 is tilted in at least a second axis relative to the first mirror's axis and includes at least one partially reflective surface on either the inner or outer surface. The second mirror 412 is arranged at or near to an aperture location of the system, which is between the relay lens and first mirror and is shaped such that the second mirror limits the light which makes it to the exit pupil presented to the user, by also acting as an optical aperture.

The partially reflective surface of the second mirror is partially transparent to one or more wavelengths. As a result, the light passed through the optical device is filtered by reflecting only certain optical wavelengths to limit what wavelengths are directed toward the optical combiner, which can be beneficial as the optical coating applied to the combiner can be optimised to perform over a discrete set of wavelengths as opposed to the full set of wavelengths emitted by the display or image source. This can help to reduce the impact the optical coating has on the view of the real world, as seen by a user, for example by maximising transmission across the visible spectrum of wavelengths.

The second mirror could also be augmented to allow additional function such as the capability to change the brightness of the virtual content. As an example the mirror could have reflectivity or transparency which is electronically controllable, such that a user could control the brightness of the system by electronically controlling either the reflectivity or transmission of the surface to allow more or less light through the device. Alternatively an electronically controllable filter, for example a liquid crystal device, could be arranged atop the mirror to provide variable absorption of incident light, such that a user could control the brightness of the system by electronically controlling either absorption of the element to allow more or less light through the device

An optically absorbent region is arranged behind the second mirror such that any transmitted light is suitably absorbed and cannot return to the optical device, to mitigate any stray light.

As can be seen from figure 5 by having the axes of each mirror being substantially orthogonal, the light path includes a double fold in at least two dimensions or axes. This means that the overall size of the optical device is reduced further giving rise to improvements relating to the number of components, weight and efficiency without any compromise to the optical quality.

Although not shown in figure 4 and 5 the optical device 402 is part of an optical system which includes further features and functionality. The optical system further includes an image source which generates the light which is ultimately delivered to the user in the form of a virtual image. The image source comprises at least one self-emissive display (not shown) which is capable of activating a plurality of emissive single pixel sources which emit visible light in one or more wavelengths, to form a digital display. The light from the image source extends over a given area and cone angle. This light is referred to as a large cone emission and comes from the display which is referred to as a large cone emission device or display. Typically the angle of a cone of emission could be anything up to about +/-90deg, or a much smaller cone angle, e.g. about +/-25deg, to satisfy the exit pupil of the designed system. This is why it is important to control the unneeded cone angle correctly, as otherwise it could propagate the optical system to the eye.

The image source is a self-emissive display, a micro-LED array, multiple display panels or any other appropriate source.

The image source is tilted in at least one axis with respect to the relay lens. In some cases, the image source is a micro-LED display panel. The image that is created through the optical system is combined with the real world image from the combiner to provide an augmenter image. In other cases multiple images sources may be used, and combined using optical filters, for example discrete red, green and blue display panels could be used in place of a single display panel which may emit red, green and blue light, and be combined using a set of dichroic filters.

The optical device is instead to be wearable in some cases. In these cases the optical device is housed in a housing attached to a helmet or other wearable frame or forms an integral part of the helmet or frame. The optical device in these cases include a head worn device (HWD) a head mounted device (HMD) or any other appropriate device

The content of the augmented image includes symbology relevant to the contact in which the optical device or system is used. Symbology can include at least one or more of the following: signs and symbols, data from sensors, processed data from sensors, combinations of sensor data, military symbology, vehicle related symbology, scene related symbology, location and positioning symbology, map symbology, speed and velocity symbology, etc. Additionally full frame video may be displayed in addition to symbology.

The optical device forms part of a system (not shown) in some cases this is used to control and or navigate a vehicle in an environment. The system generates the symbology and other information which is required to be displayed to a user. The system includes sensors for collecting data from an environment associated with the vehicle and processors for receiving, sending and processing the data to determine the data that is to be displayed to the user by an optical device according to the present invention. The user may be the pilot of an aircraft and the system may be an aircraft system.

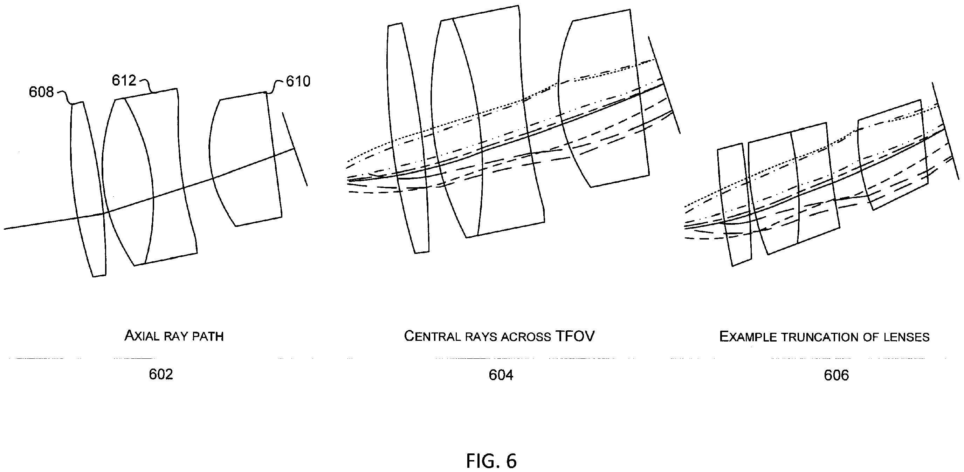

The optical device includes a relay lens 404, 600 which will now be described in further detail with reference to figure 6 which shows a number of different arrangements of lenses 602, 604 and 606. These are three of many possible arrangements. The lenses are made of any appropriate materials. In the interest of weight saving, the lenses are of a plastics material or glass in at least some cases. The relay lens offers further improvement to the augmented reality optical design and whilst shown as part of the present optical device can be used in many other circumstances where high quality, light weight lensing solutions are required.

The relay lens 600 is designed to be as simple as possible to minimise cost and component count whilst retaining a required level of performance. The relay lens 600 of each arrangement 602, 604 and 606 comprises three lenses: two singlets 608, 610, one doublet 612. At least one or more lenses have a plano (flat) rear surface, in this case the singlet 610. It is further noted that lenses 608 and 612 are arranged as a cemented optical doublet to provide a level of chromatic correction.

As shown in arrangement 602, all the lenses are co-axially aligned for simplicity and ease of assembly, however they are arranged off the optical-axis of the optical device. This arrangement is achieved through performance optimisation, the lenses are decentred and tilted with respect to the axial ray path to correct for off-axis aberrations induced by the off-axis combiner. In addition and notably the image plane is also tilted with respect to the lens assembly to achieve best focus. Arrangement 604 is the same as 602 and shows the central rays over the total field of view.

An enhancement of the arrangement 602, 604 is that during design it is recognised that a portion of the lenses is unused, as a result the relay lens is truncated so that only parts of the lenses supporting the light paths are retained. During design of the plurality of lenses a trajectory of an expected light beam that would pass through the lenses is identified. Material can be removed from each lens of the plurality of lenses where the expected light beam is not predicted to pass. The changes to the lenses in the relay lens is used to update the augmented reality optical design.

The lens arrangement 606 is beneficial for reduction in mass/volume but also causes the lenses to act as additional individual apertures, in which light which could ordinarily pass through upper portions of the lenses cannot. This avoids further spurious light in the optical device. A further measure is to ensure that the relay lens elements have suitably absorbent edges, through the use of black paint for example. It should be noted that the optical prescription of each of the lenses in the arrangements can be configured as required to suit the required function.

Whilst the optical device can be operated as a monocular device, the most likely usage is as a binocular arrangement as shown in figure 7 having two optical devices 402. Each optical device including mirror-image optics for either the right or left eyes of the user. As a result, all components can be designed un-handed for simplicity and reduced discrete part count. The optical path for either eye does not cross over, and the optical paths for either eye are completely separate. This improves configurability, maintenance options and minimises the risk of crosstalk or stray light between the two eyes. The displays are also completely independent thus if one optical channel fails or is damaged the user still has the remaining display available in the other eye, and completely separate content can be provided to either eye e.g. providing stereoscopic content.

The binocular arrangement is supported by a frame, housing or helmet designed to be worn by the user. As can be seen in figure 7, the view is a top-down view with only an axial ray bundle shown for clarity. As shown the mirrors are arranged to conveniently fold the optics around the arc of the head (e.g. around the brow) such that they are upward and away from the line of sight of the user and the users' peripheral vision is not significantly impacted.

The/each optical device is housed in a housing not shown. The housing of head worn devices must be as light as possible in order to avoid neck strain and other discomfort to the user. Not only has the housing to be compact but it must also contain the optical device without the optical elements occupying any of the FOV of the user. If the optical elements are "in the way", this could cause accidents and unclear visibility of the user. The present invention provides a solution to these problems. As can be seen in figure 7 the optical elements 404, 406, 408 and 412 enable a twofold arrangement of elements so that the lens assembly is located out of view and around the head. The optical device is thus small, compact and light weight without any compromise in terms of optical quality and performance.

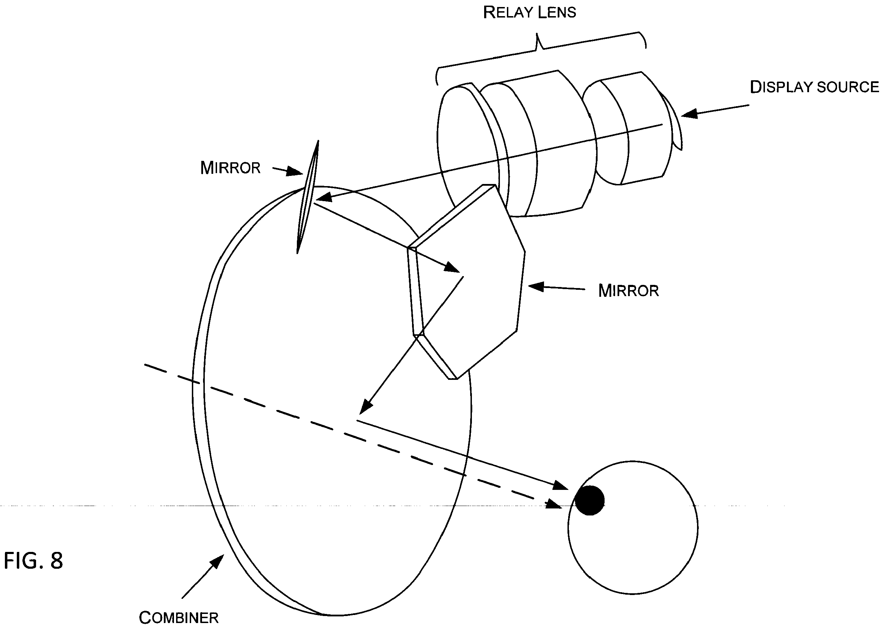

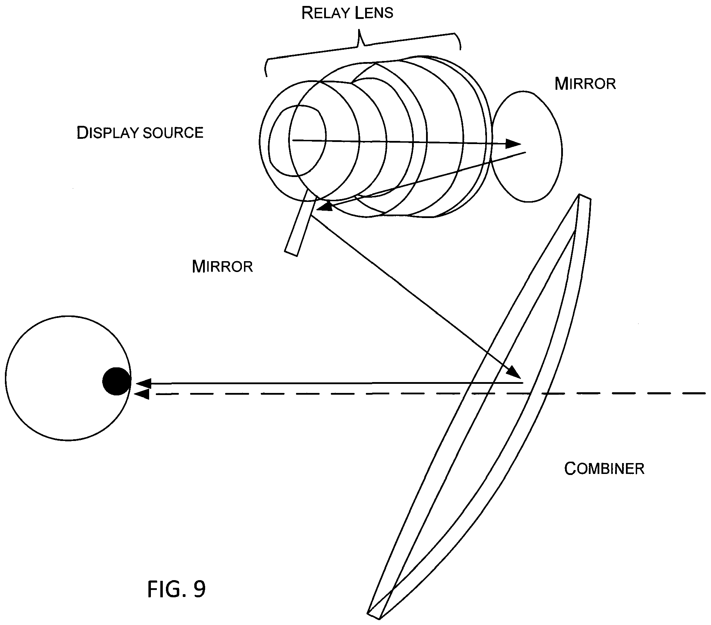

Figures 8 and 9 show simple mock-ups of the final optical design. From these figures it can be seen light is emitted from the image source, such an emissive display as described above, and collected by the relay lens. The relay lens focusses the light towards the second mirror which is located near to the optical stop of the optical design. The mirror reflects the light toward the first mirror, which also has optical power, and the light is then reflected towards the combiner element. The combiner is arranged to be partially see through so the display light is partially reflected back towards the user, whilst combining the view from the outside world.

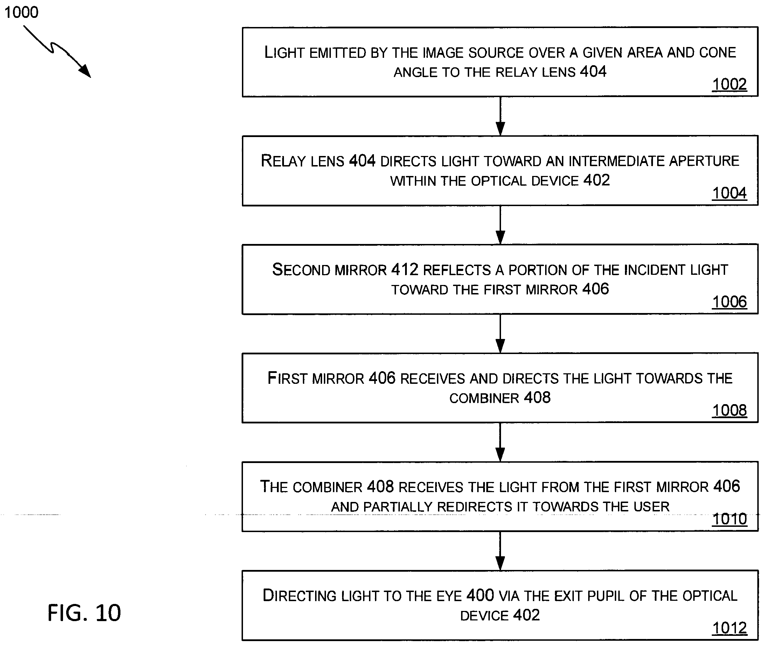

The manner in which the optical device works will now be explained with reference to the flow chart in figure 10.

A method of operation 1000 of the augmented reality optical design is as follows.

In a step 1002, light is emitted by the image source 424 over a given area and cone angle, and a portion is received by the relay lens assembly 404.

In step 1004, the relay lens assembly 404 directs the light toward an intermediate aperture within the system. Any light not transmitted by the relay lens assembly 404 is mostly absorbed in the assembly, thus controlling stray light emitted by the image source.

In step 1006, the second mirror 412 reflects a portion of the incident light received from the relay lens assembly 404 toward the first mirror 406. Any light outside of the aperture of the second mirror 412 is not reflected thus helping to shape the exit pupil of the optical device 402.

In step 1008, the first mirror 406 receives and directs the light toward the combiner 408, any light outside of the aperture of the first mirror 406 is not redirected thus helping to shape the field of view of the optical device 402.

In step 1010 the combiner 408 receives the light from the first mirror 406 and partially redirects it towards the user, forming an exit pupil at the position of the eye 400, such that a user is able to view a virtual display focused between about 30cm and infinity, dependent upon the arrangement of the relay lens assembly 404 and positioning of the image source.

In step 1012, directing light to the eye 400 via the exit pupil of the optical device 402 which is limited in part by the shape of the relay lens assembly 404 and second mirror 212, such that if a user moves their eye 400 outside the defined/corrected exit pupil the risk of viewing stray light or uncorrected portions of the image is minimised.

The exit pupil or eyebox is the region in space where the image looks clear and in focus, as it is optically well corrected. As the eye moves about this space the clarity of the virtual image can change, specifically it can get worse as the eye moves toward the edges of the defined exit pupil, or outside of the defined exit pupil. Typically optical display systems are designed to only correct the image across the exit pupil, as defined in optimisation software. Instead the present invention uses numerous apertures to ensure the exit pupil cannot be larger than as-designed due to additional light emission from the image source (i.e. larger angles in the cone of emission).

It will be appreciated that there are many variations and opinions which could be encompassed in the scope of the claims these alternatives are thus intended to be covered by the claims.

## Claims

1. An optical device made according to an augmented reality optical design, the optical device comprising a plurality of optical elements for transmitting a light from a light source for display on an eye of a user, wherein the optical device comprises:
a light source generating the light;
a lens assembly off-axis from the light source and configured to receive the light wherein the lens assembly includes a plurality of lenses and wherein the lens assembly has been truncated by removal of material from the or each lens of the plurality of lenses where an expected light beam is not predicted to pass;
a combiner, receiving the light from the lens assembly via one or more further optical elements of the plurality of optical elements and directing the light to form a virtual image at an exit pupil at the position of the eye.

2. The optical device according to claim 1, wherein the lens assembly is a relay lens.

3. The optical device according to claim 1 or claim 2, wherein the lens assembly comprises three or more lenses.

4. The optical device according to any one of the preceding claims, wherein the lens assembly is made from a plastics material or glass.

5. The optical device according to any one of the preceding claims, wherein the plurality of lenses are arranged co-axially.

6. The optical device according to any one of the preceding claims, wherein the one or more further optical elements of the plurality of optical elements comprise:
a first at least partially mirrored device;
a second optical device positioned substantially orthogonal relative to the first at least partially mirrored device, and located intermediate the lens assembly and the first at least partially mirrored device, the second optical device configured to receive the light from the lens assembly and transmit the light to the first at least partially mirrored device.

7. The optical device according to any one of the preceding claims, wherein the light source is an emissive source including a plurality of self-emissive pixels.

8. The optical device according to any one of the preceding claims, wherein optical device is arranged to fold a light path about a first axis (XYZ) and a second axis (XYZ).

9. The optical device according to any one of the preceding claims, forming part of a wearable device and wherein at least a part of the optical device is folded upward or to the side of a brow of a user.

10. An optical device made according to an augmented reality optical design, the optical device comprising a plurality of optical elements for transmitting a light from a light source for display on an eye of a user, wherein the optical device comprises:
a light source generating the light;
a lens assembly off-axis from the light source and configured to receive the light wherein the lens assembly includes a plurality of lenses and wherein the lens assembly has been truncated by removal of material from the or each lens of the plurality of lenses where an expected light beam is not predicted to pass;
a combiner, receiving the light from the lens assembly via one or more further optical elements of the plurality of optical elements and directing the light to form a virtual image at an exit pupil at the position of the eye, wherein the combiner comprises a first inner optical surface form and a second outer optical surface form, wherein the first inner optical surface form and the second inner optical surface are different to minimize deviations in an outside view from the combiner;
wherein the one or more further optical elements of the plurality of optical elements comprise:
a first at least partially mirrored device;
a second optical device positioned substantially orthogonal relative to the first at least partially mirrored device, and located intermediate the lens assembly and the first at least partially mirrored device, the second optical device configured to receive the light from the lens assembly and transmit the light to the first at least partially mirrored device.

11. A binocular optical device comprising two optical devices according to any one of the preceding claims.

12. A wearable device including one or two optical devices according to any one of claims 1 to 10.

13. A system comprising:
a plurality of processors configured to send and receive data and to process data;
one or more sensors collecting at least some of the data from an environment and sending the data to the processors; and
one or more wearable devices according to claim 12.

14. A method of directing light through an optical device made according to an augmented reality optical design, the optical device comprising a plurality of optical elements for transmitting a light from a light source for display on an eye of a user, the method comprising:
emitting (1002), via a light source (424), a light to a lens assembly, wherein the lens assembly includes a plurality of lenses and wherein the lens assembly has been truncated by removal of material from the or each lens of the plurality of lenses where an expected light beam is not predicted to pass;
directing (1008), via one or more further optical devices, the light towards a combiner 408;
directing (1012), via the combiner, the light to form a virtual image at an exit pupil of the optical device;
wherein the combiner comprises a first inner optical surface form and a second outer optical surface form, wherein the first inner optical surface form and the second inner optical surface are different to minimize deviations in an outside view from the combiner.

15. The method according to claim 15, further comprising:
designing the optical device;
determine a light path through the design;
identify areas of the lens assembly through which no light is predicted to pass;
updating the design to truncate one of more of the plurality of lenses based on where the light is predicted to pass.
